# EUROPEAN PATENT APPLICATION

(11) **EP 4 700 795 A1**
(43) Date of publication of application: **25.02.2026**
(21) Application number: 24791941.8
(22) Date of filing: 12.04.2024
(51) Int. Cl.: G21D 3/06, G06F 18/24

(54) **NUCLEAR POWER PLANT OPERATION PROTECTION METHOD AND APPARATUS, AND COMPUTER DEVICE AND STORAGE MEDIUM**

(30) Priority: 21.04.2023 CN 202310460780
(71) Applicant: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd, Shenzhen, Guangdong 518028 (CN)
(72) Inventor: LI, Kejia, Shenzhen, Guangdong 518031 (CN); HU, Yisong, Shenzhen, Guangdong 518031 (CN); WANG, Weiru, Shenzhen, Guangdong 518031 (CN); FENG, Yingjie, Shenzhen, Guangdong 518031 (CN); HU, Yousen, Shenzhen, Guangdong 518031 (CN); ZHANG, Yijun, Shenzhen, Guangdong 518031 (CN); MENG, Shuqi, Shenzhen, Guangdong 518031 (CN); ZENG, Shuo, Shenzhen, Guangdong 518031 (CN); WU, Yuting, Shenzhen, Guangdong 518031 (CN); ZHANG, Wei, Shenzhen, Guangdong 518031 (CN); MAO, Yulong, Shenzhen, Guangdong 518031 (CN); CHEN, Tianming, Shenzhen, Guangdong 518031 (CN); HE, Mingtao, Shenzhen, Guangdong 518031 (CN); LU, Xianghui, Shenzhen, Guangdong 518031 (CN)
(74) Representative: Thomas, Tomos Daniel
(86) International application number: PCT/CN2024/087559
(87) International publication number: WO 2024/217356

(57) **Abstract**

A nuclear power plant operation protection method and apparatus, and a computer device and a storage medium are provided. The nuclear power plant operation protection method includes: on a condition that a failed neutron detector is detected in a nuclear power plant, outputting a power-increase block signal to a nuclear power device of the nuclear power plant to cause the nuclear power device to operate based on the block signal (S201); retrieving an inverse matrix corresponding to the failed neutron detector from an inverse matrix library according to an identity of the failed neutron detector (S202); updating a three-dimensional core power based on the inverse matrix (S203); and removing the power-increase block signal from the nuclear power device of the nuclear power plant based on the updated three-dimensional core power, and resuming normal operation of the nuclear power device of the nuclear power plant (S204).

## Description

### CROSS-REFERENCE TO RELATED APPLICATIONS

The present application claims priority to Chinese patent application No. 2023104607807, titled "NUCLEAR POWER PLANT OPERATION PROTECTION METHOD AND APPARATUS, AND COMPUTER DEVICE AND STORAGE MEDIUM", filed on April 21, 2023, the entire content of which is incorporated herein by reference.

### TECHNICAL FIELD

The present application relates to the field of nuclear power technologies, and in particular, to a nuclear power plant operation protection method and apparatus, a computer device, and a storage medium.

### BACKGROUND

The reactor core protection system is an important component for ensuring the safe and stable operation of nuclear power plants. When a core protection system is in operation, a coefficient matrix is calculated based on the spatial positions of effective self-powered neutron detectors (SPNDs) installed in the reactor core. Then, an inverse operation is performed on the coefficient matrix to obtain an inverse matrix, and a three-dimensional core power is calculated based on the inverse matrix. When SPND failures occur, it is necessary to update the three-dimensional core power to ensure safe and stable operation of the nuclear power plants.

When SPND failures occur, existing core protection systems require real-time computation of coefficient matrices and inverse matrices to reconstruct the three-dimensional core power distribution. This results in significant computational load on computing devices and slow response due to lengthy computation times.

### SUMMARY

Based on this, to address the above technical problems, it is necessary to provide a nuclear power plant operation protection method and apparatus, a computer device, and a storage medium that can reduce the computational load and improve the response speed.

In a first aspect, the present application provides a nuclear power plant operation protection method, including:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In an embodiment, retrieving the inverse matrix corresponding to the failed neutron detector from the inverse matrix library according to the identity of the failed neutron detector includes:
determining a failure type according to the identity of the failed neutron detector; and
retrieving the inverse matrix corresponding to the failed neutron detector from the inverse matrix library according to the identity and the failure type of the failed neutron detector.

In an embodiment, determining the failure type according to the identity of the failed neutron detector includes:
determining a presence form corresponding to the failed neutron detector according to the identity of the failed neutron detector, the presence form including an individual presence and a group presence; and
determining the failure type based on the presence form.

In an embodiment, retrieving the inverse matrix corresponding to the failed neutron detector from the inverse matrix library according to the identity and the failure type of the failed neutron detector includes:
selecting a target inverse matrix library corresponding to the failure type from candidate inverse matrix libraries according to the failure type of the failed neutron detector; and
retrieving the inverse matrix corresponding to the failed neutron detector from the target inverse matrix library according to the identity of the failed neutron detector.

In an embodiment, retrieving the inverse matrix corresponding to the failed neutron detector from the target inverse matrix library according to the identity of the failed neutron detector includes:
on a condition that the failure type of the failed neutron detector is an individual failure, retrieving the inverse matrix corresponding to the identity from the target inverse matrix library according to the identity of the failed neutron detector.

In an embodiment, retrieving the inverse matrix corresponding to the failed neutron detector from the target inverse matrix library according to the identity of the failed neutron detector includes:
on a condition that the failure type of the failed neutron detector is a group failure, determining a group identity corresponding to the failed neutron detector according to the identity of the failed neutron detector; and
retrieving the inverse matrix corresponding to the group identity from the target inverse matrix library.

In a second aspect, the present application further provides a nuclear power plant operation protection apparatus, including:
a detection module configured to, on a condition that a failed neutron detector is detected in a nuclear power plant, output a power-increase block signal to a nuclear power device of the nuclear power plant to cause the nuclear power device to operate based on the block signal;
a retrieval module configured to retrieve an inverse matrix corresponding to the failed neutron detector from an inverse matrix library according to an identity of the failed neutron detector;
an update module configured to update a three-dimensional core power based on the inverse matrix; and
a control module configured to remove the power-increase block signal from the nuclear power device of the nuclear power plant based on the updated three-dimensional core power, and resume normal operation of the nuclear power device of the nuclear power plant.

In a third aspect, the present application further provides a computer device. The computer device includes a processor and a memory storing a computer program. The processor, when executing the computer program, performs:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In a fourth aspect, the present application further provides a computer-readable storage medium, having a computer program stored thereon. The computer program, when executed by a processor, causes the processor to perform:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In a fifth aspect, the present application further provides a computer program product, including a computer program. The computer program, when executed by a processor, causes the processor to perform:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In the above nuclear power plant operation protection method and apparatus, the computer device, and the storage medium, on the condition that the failed neutron detector is detected in the nuclear power plant, the power-increase block signal is output to the nuclear power device of the nuclear power plant to cause the nuclear power device to operate based on the block signal, and the inverse matrix corresponding to the failed neutron detector is retrieved from the inverse matrix library according to the identity of the failed neutron detector. The three-dimensional core power is updated based on the inverse matrix. After the three-dimensional core power is updated, the power-increase block signal is removed from the nuclear power device of the nuclear power plant, and the normal operation of the nuclear power device of the nuclear power plant is resumed. In the present application, when the failed neutron detector is detected in the nuclear power plant, the inverse matrix corresponding to the failed neutron detector can be quickly retrieved from the inverse matrix library according to the identity of the failed neutron detector. Then, based on the retrieved inverse matrix, the three-dimensional core power can be updated in a timely and rapid manner, without the need for real-time calculation of the coefficient matrix and inverse matrix. In this way, the computational load is effectively reduced, the efficiency of the nuclear power plant core protection system in updating the three-dimensional core power is significantly improved, and the power-increase block signal is promptly removed from the nuclear power device of the nuclear power plant, so that the normal operation of the nuclear power device of the nuclear power plant can be resumed.

### BRIEF DESCRIPTION OF THE DRAWINGS

FIG. 1 is a diagram illustrating an application environment of a nuclear power plant operation protection method provided in an embodiment.
FIG. 2 is a flow chart of a first nuclear power plant operation protection method provided in an embodiment.
FIG. 3 is a flow chart of retrieving an inverse matrix from an inverse matrix library provided in an embodiment.
FIG. 4 is a flow chart of retrieving an inverse matrix from a target inverse matrix library provided in an embodiment.
FIG. 5 is a flow chart of retrieving an inverse matrix when a group fails provided in an embodiment.
FIG. 6 is a flow chart of a second nuclear power plant operation protection method provided in an embodiment.
FIG. 7 is a block diagram illustrating a configuration of a first nuclear power plant operation protection apparatus provided in an embodiment.
FIG. 8 is a block diagram illustrating a configuration of a second nuclear power plant operation protection apparatus provided in an embodiment.
FIG. 9 is a diagram illustrating an internal configuration of a computer device provided in an embodiment.

### DETAILED DESCRIPTION OF THE EMBODIMENTS

In order to make the objectives, technical solutions and advantages of the present application more clearly understood, the present application will be further described in detail with the accompanying drawings and embodiments. It should be understood that the specific embodiments described herein are only used to explain the present application and not to limit the present application.

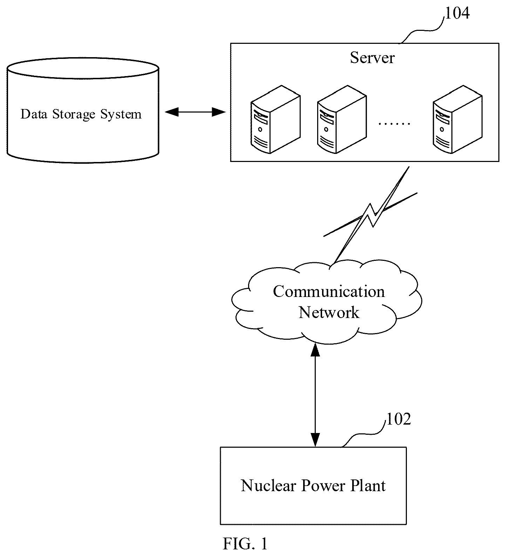

The nuclear power plant operation protection method according to embodiments of the present application can be applied to an application environment shown in FIG. 1. A nuclear power plant 102 communicates with a server 104 via a network. A data storage system can store the data that the server 104 needs to process. The data storage system may be integrated on the server 104, or placed on a cloud or other network servers. Specifically, the nuclear power plant 102 is connected to the server 104 via the network. The server 104 detects a status of a neutron detector in the nuclear power plant 102 in real time. On a condition that a failed neutron detector is detected in the nuclear power plant 102, a block signal is output to a nuclear power device of the nuclear power plant 102 to cause the nuclear power device of the nuclear power plant 102 to operate under the block signal. An inverse matrix corresponding to the failed neutron detector is retrieved from an inverse matrix library according to an identity of the failed neutron detector. A three-dimensional core power is updated based on the inverse matrix. The safe and stable operation of the nuclear power plant 102 is ensured based on the updated three-dimensional core power. The server 104 can be implemented using an individual server or a server cluster consisting of multiple servers. In this embodiment, the server 104 may be a server in a nuclear power plant protection system.

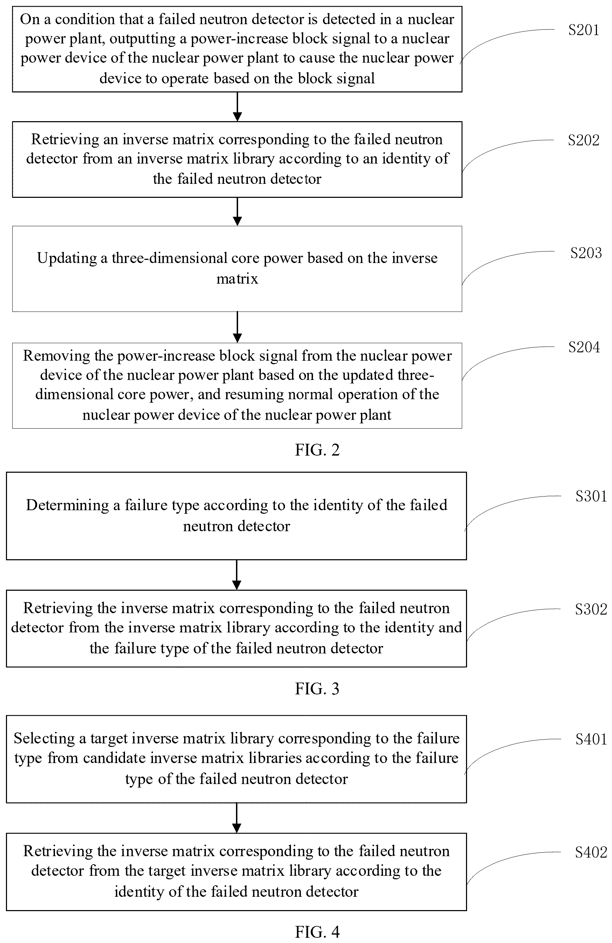

In an embodiment, a nuclear power plant operation protection method is provided. The method is described by taking its application to the server in FIG. 1 as an example, as shown in FIG. 2, the method includes the following steps.

In the step S201, on a condition that a failed neutron detector is detected in a nuclear power plant, a power-increase block signal is output to a nuclear power device of the nuclear power plant to cause the nuclear power device to operate based on the block signal.

Neutron detectors are devices in which neutrons are detected either by the ionization of gas caused by charged particles generated from the interaction of neutrons with boron or uranium, or by the subsequent activation of the material itself following neutron irradiation. The neutron detector is widely used in reactor nuclear power measurement or core neutron flux distribution measurement. The neutron detector includes, but is not limited to, a self-powered neutron detector (SPND). The inverse matrix refers to a matrix obtained by first constructing a coefficient matrix using an effective neutron detector and then inverting the coefficient matrix, used for the reconstruction calculation of the three-dimensional core power. The inverse matrix library refers to a database configured to store inverse matrices. The nuclear power device includes, but is not limited to, a R-rod group, a G-rod group, and a generator.

Optionally, in this embodiment, status information of the neutron detector in the nuclear power plant is obtained (directly or indirectly) in real time, and a status of the neutron detector is determined as effective or failed based on the status information. If the failed neutron detector is detected in the nuclear power plant, a power-increase block signal is output to the nuclear power device of the nuclear power plant to cause the nuclear power device to operate based on the block signal. The manner in which nuclear power device operates based on the block signal includes, but is not limited to, blocking the automatic and manual withdrawal of the control rod group and blocking the generator power increase. The purpose of blocking the generator power increase is to keep the generator operating at or below its original power, preventing any power increase. This allows the nuclear power plant to maintain safe operation even in the presence of a failed neutron detector.

In the step S202, an inverse matrix corresponding to the failed neutron detector is retrieved from an inverse matrix library according to an identity of the failed neutron detector.

Optionally, in this embodiment, the inverse matrix corresponding to the failed neutron detector is retrieved from the inverse matrix library according to the identity of the failed neutron detector. Since the inverse matrix library stores a correspondence between the identities of failed neutron detectors and their inverse matrices, the corresponding inverse matrix can be retrieved from the inverse matrix library according to the identity of the failed neutron detector.

In the step S203, a three-dimensional core power is updated based on the inverse matrix.

The three-dimensional core power is obtained through a three-dimensional power reconstruction calculation that uses the inverse matrix combined with a power reconstruction algorithm, in order to be expanded into the three-dimensional power distribution of the core.

An optional implementation of this embodiment is as follows: the inverse matrix is input into a trained neural network model, a new three-dimensional core power is output by the neural network model, and the three-dimensional core power is updated based on the new three-dimensional core power (for example, the original three-dimensional core power is replaced with the new three-dimensional core power).

Another optional implementation of this embodiment is as follows: a three-dimensional power reconstruction calculation is performed based on the inverse matrix and a power reconstruction algorithm to obtain a new three-dimensional core power, and the three-dimensional core power is updated based on the new three-dimensional core power (for example, the original three-dimensional core power is replaced with the new three-dimensional core power).

In the step S204, the power-increase block signal is removed from the nuclear power device of the nuclear power plant based on the updated three-dimensional core power, and normal operation of the nuclear power device of the nuclear power plant is resumed.

Optionally, in this embodiment, the update progress of the three-dimensional core power is detected in real time. After the three-dimensional core power is updated, a command to remove the block signal is sent to the nuclear power plant. Based on the updated three-dimensional core power, the power-increase block signal is removed from the nuclear power device of the nuclear power plant, and the normal operation of the nuclear power device of the nuclear power plant is resumed.

In the nuclear power plant operation protection method of the present embodiment, on the condition that the failed neutron detector is detected in the nuclear power plant, the power-increase block signal is output to the nuclear power device of the nuclear power plant to cause the nuclear power device to operate based on the block signal, and the inverse matrix corresponding to the failed neutron detector is retrieved from the inverse matrix library according to the identity of the failed neutron detector. The three-dimensional core power is updated based on the inverse matrix. After the three-dimensional core power is updated, the power-increase block signal is removed from the nuclear power device of the nuclear power plant, and the normal operation of the nuclear power device of the nuclear power plant is resumed. In the present application, when the failed neutron detector is detected in the nuclear power plant, the inverse matrix corresponding to the failed neutron detector can be quickly retrieved from the inverse matrix library according to the identity of the failed neutron detector. Then, based on the retrieved inverse matrix, the three-dimensional core power can be updated in a timely and rapid manner, without the need for real-time calculation of the coefficient matrix and inverse matrix. In this way, the computational load is effectively reduced, the efficiency of the nuclear power plant core protection system in updating the three-dimensional core power is significantly improved, and the power-increase block signal is promptly removed from the nuclear power device of the nuclear power plant, so that the normal operation of the nuclear power device of the nuclear power plant is resumed, ensuring the safe and stable operation of the nuclear power plant based on the updated three-dimensional core power.

In an embodiment, if the failed neutron detector is in a group presence, as shown in FIG. 3, an optional implementation of retrieving the inverse matrix corresponding to the failed neutron detector from the inverse matrix library according to the identity of the failed neutron detector in the step S202 includes the following steps:
In the step S301, a failure type is determined according to the identity of the failed neutron detector.

The identity refers to an identifier used to represent the identity of the neutron detector, including but not limited to a manufacturing serial number, a product number or a custom-defined unique code. The failure type refers to a type of failure of the failed neutron detector, such as an individual failure or a group failure. The individual failure means that a single neutron detector fails, while the group failure means that the failed neutron detectors exist as a group, and all neutron detectors within that group fails, primarily including a thimble failure and a partition failure.

Optionally, in this embodiment, a presence form corresponding to the failed neutron detector is determined according to its identity, and the failure type is determined based on the presence form.

An optional implementation of determining the presence form corresponding to the failed neutron detector according to the identity of the failed neutron detector is as follows: according to the identity of the failed neutron detector, a number of failed neutron detectors is obtained. If the number of failed neutron detectors is one, the presence form of the failed neutron detector is an individual presence. If the number of failed neutron detectors is two or more, a partition and a thimble corresponding to two or more failed neutron detectors are obtained from the database, and it is determined whether all neutron detectors in the partition or thimble have failed. If all neutron detectors have failed, the presence form of the failed neutron detectors is determined as a group presence. If not, the presence form of the failed neutron detectors is determined as an individual presence. The database stores the identities of all the neutron detectors, as well as their corresponding thimble group identities and partition group identities.

An optional implementation of determining the failure type based on the presence form is as follows: if the presence form of the failure neutron detector is the individual presence, the failure type is the individual failure, and if the presence form of the failure neutron detector is the group presence, the failure type is the group failure.

It should be noted that in addition to cases where all neutron detectors in a thimble fail or all detectors in a partition fail, cases of the group failure also include thimble failure itself, namely, the failure of a single neutron detector thimble is also classified as the group failure. If a subset of neutron detectors within a specific thimble or partition fails, it is classified as the individual failure. Generally, the group failure is primarily manifested as the neutron detector thimble failure and the partition failure. The neutron detector thimble failure indicates a failure in the neutron detector thimble itself, while the partition failure indicates a failure within the partition (for example, a power supply cabinet failure that cuts off power to the partition). In most other cases, the failure is that of an individual neutron detector.

In the step S302, the inverse matrix corresponding to the failed neutron detector is retrieved from the inverse matrix library according to the identity and the failure type of the failed neutron detector.

An optional implementation of this embodiment is as follows: all inverse matrices corresponding to the failure type are determined from the inverse matrix library according to the failure type, and then the inverse matrix corresponding to the identity is retrieved from all the inverse matrices corresponding to the failure type according to the identity of the failed neutron detector, thereby achieving the retrieval of the inverse matrix corresponding to the failed neutron detector from the inverse matrix library.

Another optional implementation of this embodiment is as follows: all inverse matrices corresponding to the identity are determined from the inverse matrix library according to the identity of the failed neutron detector, and then, the inverse matrix corresponding to the failure type is retrieved from all the inverse matrices corresponding to the identity according to the failure type of the failed neutron detector, thereby achieving the retrieval of the inverse matrix corresponding to the failed neutron detector from the inverse matrix library.

In the present embodiment, the failure type can be determined according to the identity of the failed neutron detector, and then the inverse matrix corresponding to the failed neutron detector is retrieved from the inverse matrix library according to the identity and the failure type of the failed neutron detector. Not only the identities of the failed neutron detectors are considered, but also their failure types covering basically all failure types are taken into account. Thereby, the retrieval of the corresponding inverse matrix from the inverse matrix library is made more accurate.

In an embodiment, to retrieve the inverse matrix more quickly, as shown in FIG. 4, an optional implementation of the step S302 includes the following steps:
In the step S401, a target inverse matrix library corresponding to the failure type is selected from candidate inverse matrix libraries according to the failure type of the failed neutron detector.

The candidate inverse matrix library refers to a selectable inverse matrix library. The target inverse matrix library refers to an inverse matrix library determined from the candidate inverse matrix libraries according to the failure type of the failed neutron detector.

Optionally, in this embodiment, a type of inverse matrix library is determined according to the failure type of the failed neutron detector, and the target inverse matrix library corresponding to the failure type is selected from the candidate inverse matrix libraries according to the type of inverse matrix library. The type of inverse matrix library includes at least an individual failure inverse matrix library and a group failure inverse matrix library. The individual failure inverse matrix library stores the inverse matrices of all failure cases in which the presence form of the failure neutron detector is the individual presence and the failure type is the individual failure. In this embodiment, an optional method for constructing the individual failure inverse matrix library is as follows. If there are n neutron detectors in the reactor core, and each neutron detector exists independently with a unique identity, a spatial location of each neutron detector can be determined according to its identity. If a single neutron detector fails, the number of remaining effective neutron detectors becomes n-1, and the corresponding coefficient matrix is of order (n-1)×(n-1). Since the number of neutron detectors is n, there are n possible spatial locations of the neutron detectors that may fail, and the number of coefficient matrices that need to be calculated in advance is also n. After calculating the n coefficient matrices, the inverse operation is performed on each of the n coefficient matrices to obtain n inverse matrices. The n inverse matrices are stored in the inverse matrix library to construct the individual failure inverse matrix library. The group failure inverse matrix library stores the inverse matrices of all failure cases in which the presence form of the failed neutron detector is the group presence and the failure type is the group failure. In this embodiment, an optional method for constructing the group failure inverse matrix library is as follows. In a case that the neutron detector thimble fails, if the number of neutron detector thimbles is k groups and the total number of neutron detectors is n, each group of neutron detector thimbles contains n/k neutron detectors, and each group of neutron detector thimbles has a unique group identity. A spatial location of each neutron detector thimble can be determined according to the group identity. When a single group of neutron detector thimbles fails, the number of remaining effective neutron detectors becomes n-n/k, and the corresponding coefficient matrix is reduced to (n-n/k)×(n-n/k) order. Since the number of neutron detector thimbles is k groups, there may be k cases of failure of a single group of neutron detector thimbles, and the number of coefficient matrices that need to be calculated in advance is k. After calculating the k coefficient matrices, the inverse operation is performed on each of the k coefficient matrices to obtain k inverse matrices. The k inverse matrices are stored in the inverse matrix library to construct the group failure inverse matrix library. In a case that a partition fails, if there are m partitions and n neutron detectors in total, and each partition has a unique group identity, a spatial location of each partition can be determined according to the group identity. Assume that from the first partition to the m-th partition, the number of neutron detectors contained in each partition is x1, x2, ..., xm, respectively. If the i-th partition fails, the number of remaining effective neutron detectors becomes n-xi, and the corresponding coefficient matrix is reduced to (n-xi)×(n-xi) order. Since the number of the partitions is m, there may be m cases of partition failure, and the number of coefficient matrices that need to be calculated in advance is m. After calculating the m coefficient matrices, the inverse operation is performed on each of the m coefficient matrices to obtain m inverse matrices. The m inverse matrices are stored in the inverse matrix library to construct the group failure inverse matrix library. It should be noted that the group failure inverse matrix library may include both the inverse matrix corresponding to the neutron detector thimble failure and the inverse matrix corresponding to the partition failure.

In the step S402, the inverse matrix corresponding to the failed neutron detector is retrieved from the target inverse matrix library according to the identity of the failed neutron detector.

Optionally, in this embodiment, a selection condition is determined according to the identity of the failed neutron detector, and the inverse matrix corresponding to the failed neutron detector is retrieved from the target inverse matrix library based on the selection condition.

In this embodiment, the target inverse matrix library corresponding to the failure type is selected from the candidate inverse matrix libraries according to the failure type of the failed neutron detector, and the inverse matrix corresponding to the failed neutron detector is retrieved from the target inverse matrix library according to the identity of the failed neutron detector, which can effectively improve the speed and accuracy of retrieval of the inverse matrix.

In an embodiment, on a condition that the failure type is an individual failure, in order to retrieve the corresponding inverse matrix, an optional implementation of the step S402 includes the following steps.

On a condition that the failure type of the failed neutron detector is an individual failure, the inverse matrix corresponding to the identity is retrieved from the target inverse matrix library according to the identity of the failed neutron detector.

Optionally, in this embodiment, if the failure type of the failed neutron detector is the individual failure, the individual failure matrix library can be determined as the target inverse matrix library according to the failure type, and the inverse matrix corresponding to the identity can be retrieved from the target inverse matrix library according to the identity of the failed neutron detector.

In this embodiment, in a case that the failure type is the individual failure, the corresponding inverse matrix can be retrieved from the target inverse matrix library according to the identity of the failed neutron detector, which can effectively improve the speed and accuracy of retrieval of the inverse matrix when the failure type is the individual failure.

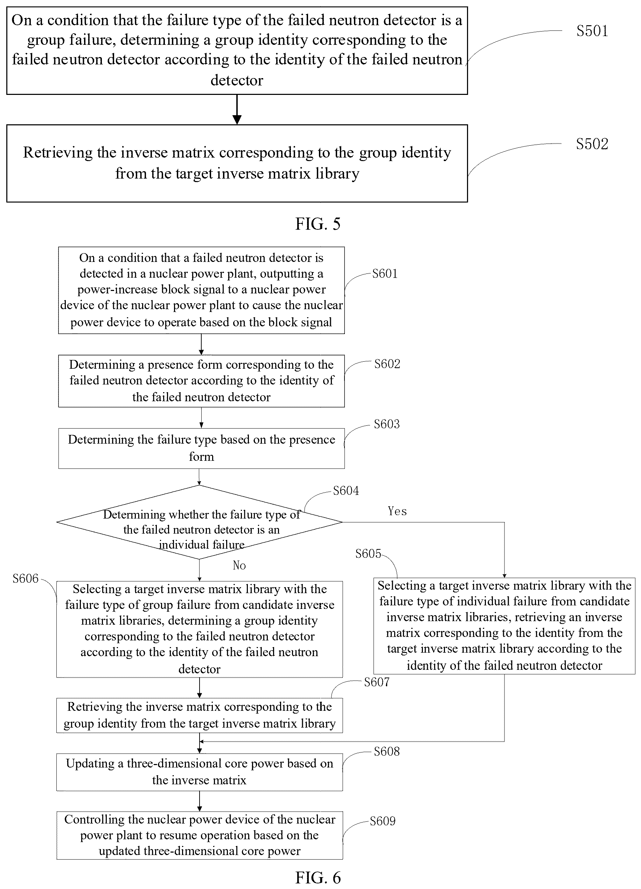

In an embodiment, on a condition that the failure type is a group failure, in order to retrieve the corresponding inverse matrix, as shown in FIG. 5, an optional implementation of the step S402 includes the following steps.

In the step S501, on a condition that the failure type of the failed neutron detector is a group failure, a group identity corresponding to the failed neutron detector is determined according to the identity of the failed neutron detector.

The group identity refers to an identity corresponding to the group to which the failed neutron detector belongs, such as a unique identity corresponding to each group of neutron detector thimbles or a unique identity corresponding to each partition.

Optionally, in this embodiment, if the failure type of the failed neutron detector is the group failure, then it is determined whether the failed neutron detector exists in a neutron detector thimble or in a partition according to the identity of the failed neutron detector. If all failed neutron detectors are in a neutron detector thimble, and the neutron detector thimble fails or all neutron detectors in the neutron detector thimble fail, then the unique identity corresponding to the neutron detector thimble is obtained. If the failed neutron detector is in a partition, and all neutron detectors in the partition fail, then the unique identity of the partition is obtained. The group identity corresponding to the failed neutron detector is determined according to the unique identity corresponding to the neutron detector thimble or the unique identity of the partition. For example, the unique identity corresponding to the neutron detector thimble or the unique identity of the partition can be taken as the group identity.

In the step S502, the inverse matrix corresponding to the group identity is retrieved from the target inverse matrix library.

Optionally, in this embodiment, the inverse matrix corresponding to the group identity is retrieved from the target inverse matrix library according to the group identity. Since the target inverse matrix library stores a correspondence between the group identities and their inverse matrices, the corresponding inverse matrix can be retrieved from the target inverse matrix library according to the group identity.

In this embodiment, when the failure type is the group failure, the corresponding group identity can be determined according to the identity of the failed neutron detector, and then the corresponding inverse matrix can be retrieved from the target inverse matrix library according to the group identity, which improves the speed and accuracy of retrieval of the inverse matrix for group failure.

In an embodiment, as shown in FIG. 6, an optional implementation of the nuclear power plant operation protection method is as follows.

In the step S601, on a condition that a failed neutron detector is detected in a nuclear power plant, a power-increase block signal is output to a nuclear power device of the nuclear power plant to cause the nuclear power device to operate based on the block signal.

In the step S602, a presence form of the failed neutron detector is determined according to an identity of the failed neutron detector. The presence form includes an individual presence and a group presence.

In the step S603, a failure type is determined based on the presence form.

In the step S604, it is determined whether the failure type of the failed neutron detector is an individual failure. If the failure type is the individual failure, the step S605 is performed. If not, the step S606 is performed.

In the step S605, a target inverse matrix library with the failure type of individual failure is selected from candidate inverse matrix libraries, an inverse matrix corresponding to the identity of the failed neutron detector is retrieved from the target inverse matrix library according to the identity of the failed neutron detector, and the step S608 is performed.

In the step S606, a target inverse matrix library with the failure type of group failure is selected from the candidate inverse matrix libraries, a group identity corresponding to the failed neutron detector is determined according to the identity of the failed neutron detector, and the step S607 is performed.

In the step S607, an inverse matrix corresponding to the group identity is retrieved from the target inverse matrix library, and the step S608 is performed.

In the step S608, a three-dimensional core power is updated based on the inverse matrix.

In the step S609, the power-increase block signal is removed from the nuclear power device of the nuclear power plant based on the updated three-dimensional core power, and normal operation of the nuclear power device of the nuclear power plant is resumed.

In this embodiment, when the failed neutron detector is detected in the nuclear power plant, the power-increase block signal is output to the nuclear power device to cause the nuclear power device to operate based on the block signal. Furthermore, the inverse matrix corresponding to the failed neutron detector can be quickly retrieved from the inverse matrix library according to the identity of the failed neutron detector. Based on this retrieved inverse matrix, the three-dimensional core power can be updated in a timely and rapid manner, without the need for real-time calculation of the coefficient matrix and inverse matrix. In this way, the computational load is effectively reduced, the efficiency of the nuclear power plant core protection system in updating the three-dimensional core power is significantly improved, and the power-increase block signal is promptly removed from the nuclear power device of the nuclear power plant, so that the normal operation of the nuclear power device of the nuclear power plant is resumed.

It should be understood that although the individual steps in the flow charts involved in the embodiments as described above are shown sequentially as indicated by arrows, the steps are not necessarily performed sequentially in the order indicated by the arrows. Unless explicitly stated herein, the execution of these steps is not strictly limited in any order and these steps can be performed in any other order. Moreover, at least some of the steps in the flow charts involved in the embodiments as described above may include multiple sub-steps or multiple stages that are not necessarily performed simultaneously, but may be performed at different moments. The order in which these sub-steps or stages are performed is not necessarily sequential, and these sub-steps or stages may be performed in turn or alternately with at least some of other steps or at least some of sub-steps or stages in other steps.

Based on the same inventive concept, embodiments of the present application also provide a nuclear power plant operation protection apparatus for implementing the nuclear power plant operation protection method as described above. The solution to the problem provided by the apparatus is similar to the implementation of the method documented above, so the specific features in the one or more embodiments of the nuclear power plant operation protection apparatus provided below may be understood with reference to the features of the nuclear power plant operation protection method above and will not be repeated here.

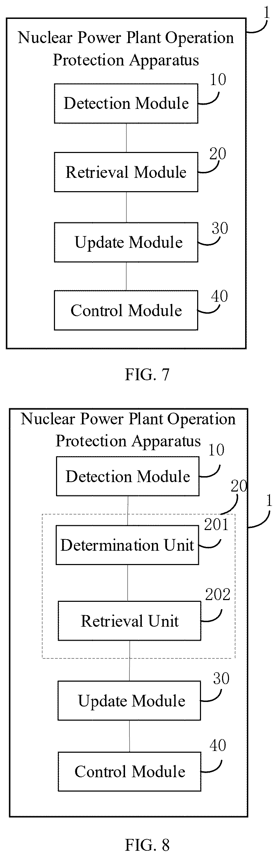

In an embodiment, as shown in FIG. 7, a nuclear power plant operation protection apparatus 1 is provided, including a detection module 10, a retrieval module 20, an update module 30 and a control module 40.

The detection module 10 is configured to, on a condition that a failed neutron detector is detected in a nuclear power plant, output a power-increase block signal to a nuclear power device of the nuclear power plant to cause the nuclear power device to operate based on the block signal.

The retrieval module 20 is configured to retrieve an inverse matrix corresponding to the failed neutron detector from an inverse matrix library according to an identity of the failed neutron detector.

The update module 30 is configured to update a three-dimensional core power based on the inverse matrix.

The control module 40 is configured to remove the power-increase block signal from the nuclear power device of the nuclear power plant based on the updated three-dimensional core power, and resume normal operation of the nuclear power device of the nuclear power plant.

In an embodiment, on the basis of FIG. 7, as shown in FIG. 8, the retrieval module 20 in FIG. 7 further includes the following units:
A determination unit 201 is configured to determine a failure type according to the identity of the failed neutron detector.
A retrieval unit 202 is configured to retrieve the inverse matrix corresponding to the failed neutron detector from the inverse matrix library according to the identity and the failure type of the failed neutron detector.

In an embodiment, the determination unit 201 shown in FIG. 8 is specifically configured to: determine a presence form corresponding to the failed neutron detector according to the identity of the failed neutron detector, the presence form including an individual presence and a group presence; and determine the failure type based on the presence form.

In an embodiment, the retrieval unit 202 shown in FIG. 8 is specifically configured to: select a target inverse matrix library corresponding to the failure type from candidate inverse matrix libraries according to the failure type of the failed neutron detector; and retrieve the inverse matrix corresponding to the failed neutron detector from the target inverse matrix library according to the identity of the failed neutron detector.

In an embodiment, the retrieval unit 202 shown in FIG. 8 is further configured to: on a condition that the failure type of the failed neutron detector is an individual failure, retrieve the inverse matrix corresponding to the identity from the target inverse matrix library according to the identity of the failed neutron detector.

In an embodiment, the retrieval unit 202 shown in FIG. 8 is further configured to: on a condition that the failure type of the failed neutron detector is a group failure, determine a group identity corresponding to the failed neutron detector according to the identity of the failed neutron detector; and retrieve the inverse matrix corresponding to the group identity from the target inverse matrix library.

The individual modules in the above nuclear power plant operation protection apparatus can be implemented in whole or in part by software, hardware or a combination thereof. Each of the above modules may be embedded in or independent of a processor in a computer device in a form of hardware, or may be stored in a memory in the computer device in a form of software, so as to be called by the processor to perform the operations corresponding to each of the above modules.

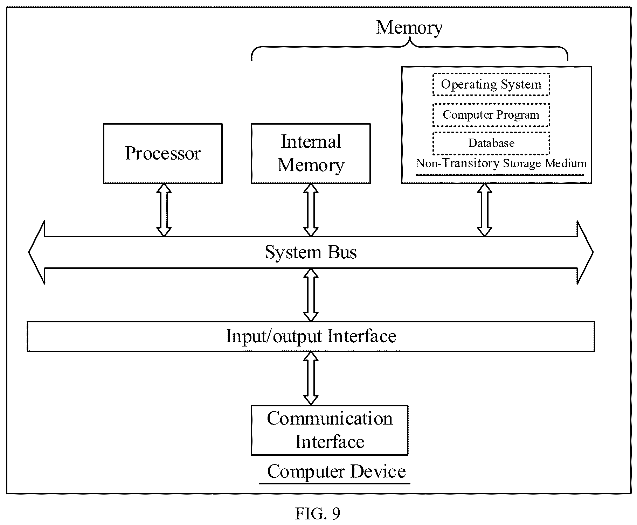

In an embodiment, a computer device is provided, which may be a server. A diagram illustrating an internal configuration of the computer device may be shown in FIG. 9. The computer device includes a processor, a memory, an input/output (I/O) interface, and a communication interface. The processor, the memory and the input/output interface are connected via a system bus, and the communication interface is connected to the system bus via the input/output interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is configured to store data related to nuclear power plants. The input/output interface of the computer device is configured to exchange information between the processor and external devices. The communication interface of the computer device is configured to communicate with external terminals via a network connection. When the computer program is executed by the processor, the nuclear power plant operation protection method is implemented.

It should be understood by a person of ordinary skill in the art that the configuration illustrated in FIG. 9 is only a block diagram of part of the configuration related to the solution of the present application, and does not constitute a limitation on the computer device to which the solution of the present application is applied. Specifically, the computer device may include more or fewer components than those shown in the figure, or may combine some components, or may have a different arrangement of components.

In an embodiment, a computer device is provided. The computer device includes a processor and a memory storing a computer program. The processor, when executing the computer program, performs the following steps:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In an embodiment, the processor, when executing the computer program, further performs the following steps: retrieving the inverse matrix corresponding to the failed neutron detector from the inverse matrix library according to the identity of the failed neutron detector, including:
determining a failure type according to the identity of the failed neutron detector; and
retrieving the inverse matrix corresponding to the failed neutron detector from the inverse matrix library according to the identity and the failure type of the failed neutron detector.

In an embodiment, the processor, when executing the computer program, further performs the following steps: determining the failure type according to the identity of the failed neutron detector, including:
determining a presence form corresponding to the failed neutron detector according to the identity of the failed neutron detector, the presence form including an individual presence and a group presence; and
determining the failure type based on the presence form.

In an embodiment, the processor, when executing the computer program, further performs the following steps: retrieving the inverse matrix corresponding to the failed neutron detector from the inverse matrix library according to the identity and the failure type of the failed neutron detector, including:
selecting a target inverse matrix library corresponding to the failure type from candidate inverse matrix libraries according to the failure type of the failed neutron detector; and
retrieving the inverse matrix corresponding to the failed neutron detector from the target inverse matrix library according to the identity of the failed neutron detector.

In an embodiment, the processor, when executing the computer program, further performs the following steps: retrieving the inverse matrix corresponding to the failed neutron detector from the target inverse matrix library according to the identity of the failed neutron detector, including:
on a condition that the failure type of the failed neutron detector is an individual failure, retrieving the inverse matrix corresponding to the identity from the target inverse matrix library according to the identity of the failed neutron detector.

In an embodiment, the processor, when executing the computer program, further performs the following steps: retrieving the inverse matrix corresponding to the failed neutron detector from the target inverse matrix library according to the identity of the failed neutron detector, including:
on a condition that the failure type of the failed neutron detector is a group failure, determining a group identity corresponding to the failed neutron detector according to the identity of the failed neutron detector; and
retrieving the inverse matrix corresponding to the group identity from the target inverse matrix library.

In an embodiment, a computer-readable storage medium is provided, having a computer program stored thereon. The computer program, when executed by a processor, causes the processor to perform the following steps:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In an embodiment, the computer program, when executed by a processor, further causes the processor to perform the following steps: retrieving the inverse matrix corresponding to the failed neutron detector from the inverse matrix library according to the identity of the failed neutron detector, including:
determining a failure type according to the identity of the failed neutron detector; and
retrieving the inverse matrix corresponding to the failed neutron detector from the inverse matrix library according to the identity and the failure type of the failed neutron detector.

In an embodiment, the computer program, when executed by a processor, further causes the processor to perform the following steps: determining the failure type according to the identity of the failed neutron detector, including:
determining a presence form corresponding to the failed neutron detector according to the identity of the failed neutron detector, the presence form including an individual presence and a group presence; and
determining the failure type based on the presence form.

In an embodiment, the computer program, when executed by a processor, further causes the processor to perform the following steps: retrieving the inverse matrix corresponding to the failed neutron detector from the inverse matrix library according to the identity and the failure type of the failed neutron detector, including:
selecting a target inverse matrix library corresponding to the failure type from candidate inverse matrix libraries according to the failure type of the failed neutron detector; and
retrieving the inverse matrix corresponding to the failed neutron detector from the target inverse matrix library according to the identity of the failed neutron detector.

In an embodiment, the computer program, when executed by a processor, further causes the processor to perform the following steps: retrieving the inverse matrix corresponding to the failed neutron detector from the target inverse matrix library according to the identity of the failed neutron detector, including:
on a condition that the failure type of the failed neutron detector is an individual failure, retrieving the inverse matrix corresponding to the identity from the target inverse matrix library according to the identity of the failed neutron detector.

In an embodiment, the computer program, when executed by a processor, further causes the processor to perform the following steps: retrieving the inverse matrix corresponding to the failed neutron detector from the target inverse matrix library according to the identity of the failed neutron detector, including:
on a condition that the failure type of the failed neutron detector is a group failure, determining a group identity corresponding to the failed neutron detector according to the identity of the failed neutron detector; and
retrieving the inverse matrix corresponding to the group identity from the target inverse matrix library.

In an embodiment, a computer program product is provided, including a computer program. The computer program, when executed by a processor, causes the processor to perform the following steps:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

In an embodiment, the computer program, when executed by a processor, further causes the processor to perform the following steps: retrieving the inverse matrix corresponding to the failed neutron detector from the inverse matrix library according to the identity of the failed neutron detector, including:
determining a failure type according to the identity of the failed neutron detector; and
retrieving the inverse matrix corresponding to the failed neutron detector from the inverse matrix library according to the identity and the failure type of the failed neutron detector.

In an embodiment, the computer program, when executed by a processor, further causes the processor to perform the following steps: determining the failure type according to the identity of the failed neutron detector, including:
determining a presence form corresponding to the failed neutron detector according to the identity of the failed neutron detector, the presence form including an individual presence and a group presence; and
determining the failure type based on the presence form.

In an embodiment, the computer program, when executed by a processor, further causes the processor to perform the following steps: retrieving the inverse matrix corresponding to the failed neutron detector from the inverse matrix library according to the identity and the failure type of the failed neutron detector, including:
selecting a target inverse matrix library corresponding to the failure type from candidate inverse matrix libraries according to the failure type of the failed neutron detector; and
retrieving the inverse matrix corresponding to the failed neutron detector from the target inverse matrix library according to the identity of the failed neutron detector.

In an embodiment, the computer program, when executed by a processor, further causes the processor to perform the following steps: retrieving the inverse matrix corresponding to the failed neutron detector from the target inverse matrix library according to the identity of the failed neutron detector, including:
on a condition that the failure type of the failed neutron detector is an individual failure, retrieving the inverse matrix corresponding to the identity from the target inverse matrix library according to the identity of the failed neutron detector.

In an embodiment, the computer program, when executed by a processor, further causes the processor to perform the following steps: retrieving the inverse matrix corresponding to the failed neutron detector from the target inverse matrix library according to the identity of the failed neutron detector, including:
on a condition that the failure type of the failed neutron detector is a group failure, determining a group identity corresponding to the failed neutron detector according to the identity of the failed neutron detector; and
retrieving the inverse matrix corresponding to the group identity from the target inverse matrix library.

A person of ordinary skill in the art may understand that implementation of all or part of the processes in the methods of the above embodiments may be completed by instructing the relevant hardware through a computer program. The computer program may be stored in a non-transitory computer-readable storage medium. When the computer program is executed, it may include the processes of the respective methods according to the foregoing embodiments. Any reference to memory, database or other medium used of the embodiments provided in the present application may include at least one of a non-transitory or a transitory memory. The non-transitory memory may include a read-only memory (ROM), a magnetic tape, a floppy disk, a flash memory, an optical memory, a high-density embedded non-transitory memory, a resistive random-access memory (ReRAM), a magneto resistive random-access memory (MRAM), a ferroelectric random-access memory (FRAM), a phase change memory (PCM), or a graphene memory, etc. The transitory memory may include a random-access memory (RAM) or an external cache memory, etc. As an illustration rather than a limitation, the random-access memory may be in various forms, such as a static random-access memory (SRAM) or a dynamic random-access memory (DRAM), etc. The database involved in the embodiments provided by the present application may include at least one of a relational database or a non-relational database. The non-relational database may include, but is not limited to, a blockchain-based distributed database, etc. The processor involved in the embodiments provided by the present application may be, but is not limited to, a general purpose processor, a central processor, a graphics processor, a digital signal processor, a programmable logic device, a data processing logic device based on quantum computation, and the like.

The technical features in the above embodiments may be combined arbitrarily. For concise description, not all possible combinations of the technical features in the above embodiments are described. However, provided that they do not conflict with each other, all combinations of the technical features are to be considered to be within the scope of protection of the present application.

The above-mentioned embodiments only describe several implementations of the present application, and their description is specific and detailed, but should not be understood as a limitation on the protection scope of the present application. It should be noted that, for a person of ordinary skill in the art, various variations and improvements can be further made without departing from the conception of the present application, and these all fall within the protection scope of the present application. Therefore, the protection scope of the present application should be subject to the appended claims.

## Claims

1. A nuclear power plant operation protection method, comprising:
on a condition that a failed neutron detector is detected in a nuclear power plant, outputting a power-increase block signal to a nuclear power device of the nuclear power plant to cause the nuclear power device to operate based on the block signal;
retrieving an inverse matrix corresponding to the failed neutron detector from an inverse matrix library according to an identity of the failed neutron detector;
updating a three-dimensional core power based on the inverse matrix; and
removing the power-increase block signal from the nuclear power device of the nuclear power plant based on the updated three-dimensional core power, and resuming normal operation of the nuclear power device of the nuclear power plant.

2. The method of claim 1, wherein retrieving the inverse matrix corresponding to the failed neutron detector from the inverse matrix library according to the identity of the failed neutron detector comprises:
determining a failure type according to the identity of the failed neutron detector; and
retrieving the inverse matrix corresponding to the failed neutron detector from the inverse matrix library according to the identity and the failure type of the failed neutron detector.

3. The method of claim 2, wherein determining the failure type according to the identity of the failed neutron detector comprises:
determining a presence form corresponding to the failed neutron detector according to the identity of the failed neutron detector, the presence form comprising an individual presence and a group presence; and
determining the failure type based on the presence form.

4. The method of claim 2, wherein retrieving the inverse matrix corresponding to the failed neutron detector from the inverse matrix library according to the identity and the failure type of the failed neutron detector comprises:
selecting a target inverse matrix library corresponding to the failure type from candidate inverse matrix libraries according to the failure type of the failed neutron detector; and
retrieving the inverse matrix corresponding to the failed neutron detector from the target inverse matrix library according to the identity of the failed neutron detector.

5. The method of claim 4, wherein retrieving the inverse matrix corresponding to the failed neutron detector from the target inverse matrix library according to the identity of the failed neutron detector comprises:
on a condition that the failure type of the failed neutron detector is an individual failure, retrieving the inverse matrix corresponding to the identity from the target inverse matrix library according to the identity of the failed neutron detector.

6. The method of claim 4, wherein retrieving the inverse matrix corresponding to the failed neutron detector from the target inverse matrix library according to the identity of the failed neutron detector comprises:
on a condition that the failure type of the failed neutron detector is a group failure, determining a group identity corresponding to the failed neutron detector according to the identity of the failed neutron detector; and
retrieving the inverse matrix corresponding to the group identity from the target inverse matrix library.

7. A nuclear power plant operation protection apparatus, comprising:
a retrieval module configured to, on a condition that a failed neutron detector is detected in a nuclear power plant, output a power-increase block signal to a nuclear power device of the nuclear power plant to cause the nuclear power device to operate based on the block signal, and retrieve an inverse matrix corresponding to the failed neutron detector from an inverse matrix library according to an identity of the failed neutron detector;
an update module configured to update a three-dimensional core power based on the inverse matrix; and
a control module configured to remove the power-increase block signal from the nuclear power device of the nuclear power plant based on the updated three-dimensional core power, and resume normal operation of the nuclear power device of the nuclear power plant.

8. A computer device, comprising a processor and a memory storing a computer program, wherein the processor, when executing the computer program, implements the steps of the nuclear power plant operation protection method of any one of claims 1 to 6.

9. A computer-readable storage medium, having a computer program stored thereon, wherein when the computer program is executed by a processor, the steps of the nuclear power plant operation protection method of any one of claims 1 to 6 are implemented.

10. A computer program product, comprising a computer program, wherein when the computer program is executed by a processor, the steps of the nuclear power plant operation protection method of any one of claims 1 to 6 are implemented.
